# EUROPÄISCHE PATENTSCHRIFT

(11) **EP 1 508 182 B1**
(45) Veröffentlichungstag und Bekanntmachung des Hinweises auf die Patenterteilung: **30.11.2005**
(21) Anmeldenummer: 03714881.4
(22) Anmeldetag: 26.03.2003
(51) Int. Cl.: H01M 10/50

(54) **BATTERIE MIT WENIGSTENS EINER ELEKTROCHEMISCHEN SPEICHERZELLE UND EINER KüHLEINRICHTUNG**
BATTERY COMPRISING AT LEAST ONE ELECTROCHEMICAL STORAGE CELL AND A COOLING DEVICE
BATTERIE COMPORTANT AU MOINS UNE CELLULE DE STOCKAGE ELECTROCHIMIQUE ET UN DISPOSITIF DE REFROIDISSEMENT

(30) Priorität: 29.05.2002 DE 10223782
(43) Veröffentlichungstag der Anmeldung: 23.02.2005
(73) Patentinhaber: DaimlerChrysler AG, 70567 Stuttgart (DE)
(72) Erfinder: WEGNER, Bernd, 89134 Blaustein (DE)
(86) Internationale Anmeldenummer: PCT/EP2003/003113
(87) Internationale Veröffentlichungsnummer: WO 2003/103083

(56) Entgegenhaltungen:
- DE-A- 10 034 134
- DE-A- 19 750 069
- FR-A- 2 782 399
- US-A- 6 087 038

## Beschreibung

Die Erfindung betrifft eine Batterie mit wenigstens einer elektrochemischen Speicherzelle und einer Kühleinrichtung, wobei die wenigstens eine elektrochemische Speicherzelle zwischen Teilen der Kühleinrichtung angeordnet ist, und wobei die Kühleinrichtung von einem flüssigen Kühlmedium durchströmt ist.

Aus der DE 195 03 085 A1 ist ein Batteriemodul bekannt, in welchem mehrere elektrochemische Speicherzellen durch sie elektrisch isolierende und Kanäle für ein flüssiges Kühlmedium bildende Einbauten auf Abstand voneinander gehalten sind. Die Einbauten bilden damit unter anderem eine Kühleinrichtung, zwischen welchen die einzelne Speicherzellen angeordnet sind. Die Zufuhr und die Abfuhr des Kühlmediums erfolgt über spezielle Kanäle, welche hinsichtlich ihres durchströmbaren Querschnitts so ausgestaltet sind, dass es zu einer gleichmäßigen Kühlung der Speicherzellen kommt.

Dementsprechend ist der Aufbau der Einbauten und der Kanäle sehr komplex und erfordert eine Vielzahl von einzelnem Bauteilen, welche jeweils gegeneinander abgedichtet werden müssen. Um ein eine Wärmeübertrag ermöglichendes flächiges Anliegen der Einbauten an den Flachseiten der Speicherzellen realisieren zu können, müssen außerdem extrem geringe Fertigungstoleranzen sowohl bei den Speicherzellen als auch bei den Einbauten eingehalten werden, was mit einem erheblich Kostenaufwand verbunden ist. Sollen außerdem Speicherzellen eingesetzt werden, welche abweichend zu den Speicherzellen der oben genannten Schrift nicht überwiegend flach sondern mit gekrümmten Aussenflächen ausgebildet sind, beispielsweise zylindrische Speicherzellen, so gewinnt die Problematik hinsichtlich der Fertigungstoleranzen weiter an Bedeutung. Dies kann soweit führen, dass zumindest bei zylindrischen Speicherzellen die Herstellung mit vertretbarem Aufwand nicht mehr möglich ist.

Des weiteren sind aus dem allgemeinen Stand der Technik Batterien bekannt, welche mittels Luft als Kühlmedium gekühlt werden. Derartige Batterien sind beispielsweise durch die DE 32 24 161 A1 oder die DE 100 03 247 A1 beschrieben.

Zum Fördern der Luft als Kühlmedium sind jeweils Fördereinrichtungen, wie z.B. Gebläse oder dergleichen, notwendig, welche in nachteiliger Weise erhebliche Lärmemissionen verursachen. Des weiteren ist die durch die Luft zu erzielenden Kühlleistung für einige Batterietypen bei hochdynamischen Wechseln zwischen Laden und Entladen, insbesondere beim Laden mit sehr hohen Strömen, wie sie beispielsweise beim Einsatz in Kraftfahrzeugen beim Einspeichern von Bremsrekuperationsenergie auftreten, nicht ausreichend.

Es ist daher die Aufgabe der Erfindung eine Batterie mit wenigstens einer elektrochemischen Speicherzelle und einer Kühleinrichtung zu schaffen, welche so ausgebildet ist, dass sie hochdynamisch belastbar ist, dass sie einfach und kostengünstig in der Herstellung ist, und dass sie die oben genannten Nachteile vermeidet.

Gelöst wird diese Aufgabe durch eine Batterie, bei welcher die wenigstens eine elektrochemische Speicherzelle in wenigstens einer Öffnung der Kühleinrichtung aufgenommen ist, und mit jeweils wenigstens einer in einer Richtung senkrecht zu einer Längsachse der elektrochemische Speicherzelle gekrümmten Aussenfläche zumindest teilweise in kraftschlüssigem Kontakt mit der Kühleinrichtung steht, wobei die Kühleinrichtung in den Bereichen des kraftschlüssigen Kontakts wenigstens eine Dehnfuge aufweist.

Durch die sehr effiziente und günstige Ausbildung der Kühleinrichtung gemäß der Erfindung können herkömmliche, bekannte und unbegrenzt verfügbare Speicherzellen, insbesondere Hochleistungsspeicherzellen, wie Nickelmetallhydrid- oder Lithiumzellen, verwendet werden. Diese Speicherzellen, welche üblicherweise zylindrisch ausgebildet sind oder zumindest eine gekrümmte Oberfläche aufweisen, können bei der erfindungsgemäßen Batterie durch den oben beschriebenen Aufbau der Kühleinrichtung ideal gekühlt werden. Das dabei verwendete flüssige Kühlmedium stellt eine vergleichsweise hohe Kühlleistung sicher, ohne dass dafür allzu große Volumenströme des Kühlmediums erforderlich werden. Die benötigten Volumenströme lassen sich vielmehr über eine einfache und kostengünstige Fördereinrichtung bereitstellen. Beim bevorzugten Einsatzzweck der erfindungsgemäßen Batterie in einem Kraftfahrzeug, kann insbesondere auch eine Kombination des Kühlkreislaufs für die Kühleinrichtung mit einer üblicherweise vorhandenen Klimaanlage bzw. deren Kühlkreislauf erfolgen.

Durch die Aufnahme der Speicherzelle in der Öffnung und die Dehnfuge im Bereich des Kontakts zwischen Speicherzelle und Kühleinrichtung wird erreicht, dass sich die Wandung der Kühleinrichtung zumindest teilweise elastisch an die Speicherzelle anlegt, so dass im Bereich der gekrümmten Aussenfläche der Speicherzelle ein sehr großflächiger kraftschlüssiger Kontakt möglich ist. Dabei sind die bei der Fertigung einzuhaltenden Toleranzen vergleichsweise gering, da durch die mittels der Dehnfuge geschaffene Elastizität eine Toleranzausgleich erzielt werden kann. Bei einer vergleichbaren Ausführung ohne diese erfindungsgemäße Eigenschaft, müssten sehr enge -und damit teure und aufwändig zu fertigende- Toleranzen sowohl seitens der Aussenfläche der Speicherzelle, als auch seitens der Öffnung eingehalten werden, um eine entsprechend große Kontaktfläche zu erhalten, welche für einen ausreichende Wärmeleitung von der Speicherzelle auf die von dem Kühlmedium durchströmte Kühleinrichtung, bei der benötigten Kühlleistung, ausreicht.

Gemäß einer sehr vorteilhaften Weiterbildung der Batterie ist deren Kühleinrichtung aus einem Kunststoff ausgebildet, wobei die wenigstens eine Öffnung und die wenigsten eine Dehnfuge überwiegend in Richtung der Längsachse der elektrochemische Speicherzelle ausgerichtet sind.

Durch die Verwendung eines Kunststoffes für die Herstellung der Kühleinrichtung wird eine elektrische Isolation der einzelnen Speicherzellen unnötig. Die Kühleinrichtung übernimmt diese Aufgabe. Dadurch wird die Dicke des Materials zwischen dem in der Kühleinrichtung strömenden Kühlmedium und der zu kühlenden Speicherzelle minimiert. Zusätzlich wird die Anzahl der benötigten Wärmeübergänge zwischen verschiedenen Materialien reduziert. Damit lässt sich die zu erzielende Kühlleistung weiter steigern.

Außerdem wird durch die Ausrichtung der Dehnfuge überwiegend in Richtung der Längsachse der Speicherzelle die oben bereits erwähnt Elastizität in einer Weise realisiert, welche ein möglichst großflächige Anlage der Wandung der Kühleinrichtung an der Aussenfläche der Speicherzelle ermöglicht. Durch die sich dabei ergebende Minimierung der Spalträume zwischen der Speicherzelle und der Kühleinrichtung wird ein sehr hoher Anteil an Wärmeableitung, mit nur sehr geringem Anteil an Wärmeabstrahlung in den Bereich ohne unmittelbaren Kontakt zwischen der Speicherzelle und der Kühleinrichtung, erzielt. Die Kühlleistung kann so noch weiter optimiert werden.

Gemäß einer bevorzugten Ausführungsformen umfasst die Batterie mehrere der elektrochemischen Speicherzellen, welche jeweils zylindrisch ausgebildet und in den Öffnungen der Kühleinrichtung angeordnet sind, wobei die Öffnungen in der Art der dichtesten Packung so angeordnet sind, dass die Längsachsen der Öffnungen und der elektrochemischen Speicherzellen jeweils wenigsten annähernd parallel zueinander verlaufen.

Die in der aus der Kristallographie bekannten Art und Weise der dichtesten "Kugelpackung" angeordneten zylindrischen Speicherzellen stehen in mehreren jeweils um den Betrag eines halben Durchmessers der Speicherzellen zueinander versetzt liegenden Reihen. Dabei stehen die einzelnen Speicherzellen jeweils parallel zueinander. Die Anordnung erlaubt eine sehr dichte Pakkung der einzelnen Speicherzellen in der Batterie, wobei die zwischen den einzelnen Speicherzellen verbleibenden Räume ausreichend Platz für die Kühlung und weitere Funktionselemente im Bereich der Kühleinrichtung bieten. Die Batterie wird durch diese besonders günstige Ausgestaltung der Erfindung hinsichtlich ihrer Größe bei idealer Kühlbarkeit und bestmöglicher Funktionalität optimiert.

In einer sehr vorteilhaften Weiterbildung dieser Idee der Erfindung weisen die Bereiche zwischen den einzelnen Öffnungen für die elektrochemischen Speicherzellen jeweils durch Wandungen von dem Kühlmedium getrennte Durchtrittsöffnungen auf, deren Mittelachsen wenigstens annähernd parallel zu den Längsachsen der elektrochemischen Speicherzellen angeordnet sind.

Die in den Bereichen zwischen den einzelnen Öffnungen für die elektrochemischen Speicherzellen, den sogenannten Zwickeln, angeordneten und von dem direkten Kontakt mit den Kühlmedium getrennten Durchtrittsöffnungen erlauben die Aufnahme von Funktionselementen, wie z.B. Befestigungsmitteln, elektrischen Verbindungen und dergleichen. Da die Durchtrittsöffnungen ebenfalls von dem Kühlmittel umströmt werden, kann, die Kühlung auch für diese Funktionselemente genutzt werden, falls dies erforderlich sein sollte.

In einer sehr günstigen Weiterbildung dieser Idee bilden Wandungen der Öffnungen für die elektrochemischen Speicherzellen zusammen mit den Wandungen der Dehnfugen und den Wandungen der Durchtrittsöffnungen jeweils parallel zu den Längsachsen verlaufende Kühlkanäle aus, wobei die Kühlkanäle mit wenigstens einem Verteilerkanal zum Verteilen des Kühlmediums in die Kühlkanäle und mit wenigstens einem Sammelkanal zum Sammeln des Kühlmediums aus den Kühlkanälen verbunden sind.

Durch diesen Aufbau entsteht bei bestmöglicher Elastizität und den damit verbundenen oben bereits angegeben Vorteilen die Möglichkeit sehr viele Speicherzellen durch jeweils mehrere der Kühlkanäle gleichzeitig und sehr gleichmäßig zu kühlen.

In einer vorteilhaften Weiterbildung der Erfindung kann es außerdem vorgesehen werden, dass die Öffnungen für die elektrochemischen Speicherzellen und die Durchtrittsöffnungen zumindest durch einen der Kanäle zum Sammeln und/oder Verteilen des Kühlmediums durchgeführt sind.

Die Zugänglichkeit zu den Speicherzellen von zumindest einer Seite aus, kann somit sichergestellt werden. Die entsprechenden Vereinfachungen bei der Montage und der Wartung der Batterie sollten offensichtlich sein. Dabei kann die einzelne Speicherzelle sowohl in einer als "Sackloch" ausgebildeten Öffnungen, als auch in einer durchgehenden Öffnung, welche die Zugänglichkeit zu der Speicherzelle von zwei Seiten aus ermöglicht, ausgebildet sein.

In einer weiteren sehr günstigen Ausgestaltung dieser soeben genannten Weiterbildung der erfindungsgemäßen Batterie reichen die Dehnfugen in den Öffnungen nicht bis in den Bereich des zumindest einen Kanals zum Sammeln und/oder Verteilen des Kühlmediums, wobei die Öffnungen für die elektrochemischen Speicherzellen im Bereich des zumindest einen Kanals zum Sammeln und/oder Verteilen des Kühlmediums einen größeren Durchmesser aufweisen, als im Bereich der Dehnfugen, und wobei der Durchmesser im Bereich der Dehnfugen bei nicht eingesetzten elektrochemischen Speicherzellen kleiner als der Durchmesser der elektrochemischen Speicherzellen ist.

Gemäß dieser Ausgestaltung kann die einzelne Speicherzelle ohne oder zumindest ohne eine nennenswerte Berührung durch den und/oder die Kanäle zum Sammeln und/oder Verteilen des Kühlmediums in die Öffnung eingeschoben werden. Im Bereich der Dehnfugen, kommt es durch den entsprechend kleineren Durchmesser der Öffnung dann zu der elastischen Verformung der Kühlkanäle und zu einem Klemmen der Speicherzelle in diesem Bereich. Das Klemmen stellt dabei einerseits den kraftschlüssigen und hinsichtlich der Wärmeleitung optimierten Kontakt zwischen der Wandung des Kühlkanals und der Aussenfläche der Speicherzelle sicher, andererseits wird die Speicherzelle dadurch auch mechanisch gehalten und in ihrer Position fixiert. Zur mechanischen Montage der Batterie müssen also lediglich die Speicherzellen in die Öffnungen der Kühleinrichtung eingeschoben werden, ohne dass weitere Arbeitsschritte, wie z.B. ein Befestigen oder dergleichen, notwendig wären.

Eine besonders günstige und vorteilhafte Verwendung einer derartigen Batterie gemäß einer oder mehrerer der oben genannten Möglichkeit zur Ausgestaltung liegt in ihrem Einsatz als elektrische Energiespeichereinrichtung in einem Fahrzeug mit wenigstens einer zu Traktionszwecken genutzten Elektromaschine.

Eine Batterie, wie sie durch die Erfindung beschreiben ist, ermöglicht eine sehr hohe elektrische Leistung je Volumeneinheit. Sie ermöglicht den Betrieb, insbesondere das Laden und Entladen mit sehr hohen Strömen, da die hierbei unvermeidlich entstehende Verlustwärme durch die Kühleinrichtung optimal abtransportiert werden kann. Diese Punkte prädestinieren die Batterie für den Einsatz in Kraftfahrzeugen, da insbesondere dabei die Anforderungen an die genannten Punkte sehr hoch sind. Dabei spielt es keine Rolle ob die Batterie zur alleinigen Versorgung von Traktionskomponenten, mit einer Aufladung aus einem stationären Stromerzeuger und gegebenenfalls einer Nachladung mit Leistung, welche bei der Bremsrekuperation gewonnen wurde, oder im Rahmen eines hybridisierten Antriebs- und/oder Energieversorgungssystem eingesetzt wird.

Weitere vorteilhafte Ausgestaltungen der Erfindung ergeben sich aus den restlichen Unteransprüchen und aus dem Ausführungsbeispiel, welches anhand der Zeichnung nachfolgend erläutert wird.

Es zeigt:
- Fig. 1: eine Darstellung einer Kühleinrichtung einer erfindungsgemäßen Batterie im Teilschnitt in einer Draufsicht;
- Fig. 2: eine stark schematisierte Darstellung der Kühleinrichtung in einem Querschnitt;
- Fig. 3: ein Teilschnitt gemäß der Linie III-III in Fig. 1; und
- Fig. 4: eine Draufsicht auf die Kühleinrichtung im Teilschnitt der erfindungsgemäßen Batterie in einem Gehäuse.

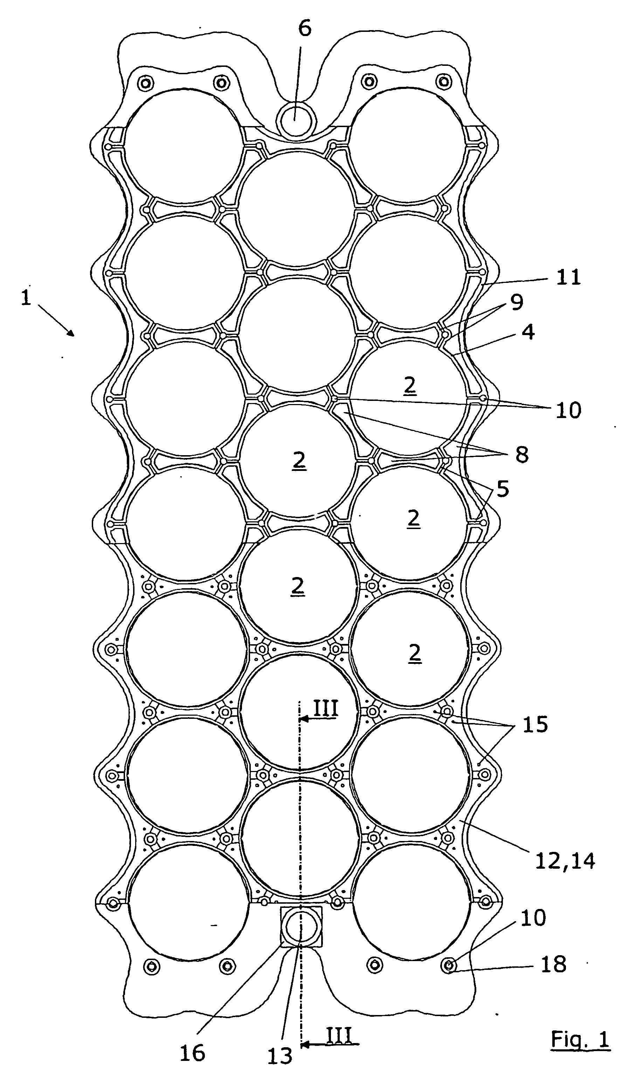

In Fig. 1 ist in einer teilweise geschnittenen Darstellung eine Draufsicht auf eine Kühleinrichtung 1 erkennbar. Die Kühleinrichtung 1 weist dabei zahlreiche Öffnungen 2 zur Aufnahme von Speicherzellen 3, welche hier nicht explizit dargestellt sind, auf. Die Öffnungen 2 entsprechen mit ihrer Querschnittsform zumindest in etwa dem Querschnitt einer Aussenfläche der Speicherzellen 3, welche zumindest in einer Richtung senkrecht zur Längsachse der Speicherzelle 3 gekrümmt ist. In dem hier beschriebenen Ausführungsbeispiel sind die Speicherzellen 3 als Zylinder ausgebildet, ohne den Erfindungsgedanken jedoch auf eine derartige zylindrische Form einzuschränken. Um die Fig. 1 übersichtlich zu halten, sind von den Öffnungen 2 -ebenso wie von den nachfolgend noch erläuterten Bauteilen- jeweils nur einige mit Bezugszeichen versehen worden, obwohl jeweils mehrere der jeweiligen Bauteile vorhanden sind, wie es leicht zu erkennen ist.

Die Speicherzellen 3 selbst stehen nun im Bereich ihrer hier zylindrischen Aussenfläche in kraftschlüssigem Kontakt mit der Kühleinrichtung 1 und hier insbesondere mit Wandungen 4 der Öffnungen 2. Der kraftschlüssige Kontakt ermöglicht eine direkt Berührung der Wandungen 4 mit den Aussenflächen der Speicherzellen 3. Über eine gewisse Elastizität des Materials der Wandungen 4, welche darüberhinaus durch Dehnfugen 5 im Bereich der Wandungen 4 unterstützt wird, lassen sich trotz eventueller fertigungsbedingter Form- und/oder Maßabweichungen zwischen den einzelnen Öffnungen 2 und den einzelnen Speicherzellen 3 vergleichsweise großflächige Bereiche mit einem unmittelbaren kraftschlüssigen Kontakt zwischen den Wandungen 4 und der Aussenfläche der Speicherzellen 3 erreichen. Die Ableitung von Wärme an die ihrerseits durch ein flüssiges Kühlmedium gekühlten Wandungen 4 der Kühleinrichtung 1 kann somit sehr effizient erfolgen. Die Mögliche Kühlleistung kann gegenüber herkömmlichen Systemen erheblich gesteigert werden.

Als Material für die Kühleinrichtung 1 sind verschiedene Werkstoffe denkbar. Neben leicht, insbesondere mittels Druckgussverfahren, zu verarbeitenden Metallen, wie beispielsweise Aluminium, spielen hier vor allem Kunststoffe eine entscheidende Rolle. Da herkömmliche zylindrische Speicherzellen 3 im allgemeinen eine metallische Aussenfläche mit einer Isolationsfolie aufweisen, gibt es bei der Verwendung von metallischen Kühleinrichtungen 1 zwei Wärmeübergänge, zuerst von der Aussenfläche auf die Isolationsfolie und dann von der Isolationsfolie auf die Kühleinrichtung 1. Wird dagegen ein Kunststoff, wie z.B. Polypropylen (PP), Polyamid (PA) oder dergleichen, verwendet so kann auf die Isolationsfolie verzichtet werden. Zusätzlich zu der reinen Einsparung der Isolationsfolie und des mit ihr verbundenen Montageaufwands, lässt sich auch die Anzahl der Wärmeübergänge halbieren und damit die Effizienz der Wärmeübertragung bei systemintegrierter Isolation steigern. Des weiteren sind derartige Kunststoffe, beispielsweise durch Spritzguss, vergleichsweise einfach zu verarbeiten, leicht und kostengünstig. Die Ausführung der Kühleinrichtung kann dabei z.B. so sein, dass diese aus zwei oder ggf. aus drei Spritzgussteilen hergestellt wird, welche dann zu einer einstückigen Kühleinrichtung verklebt werden können.

Außerdem wird durch die Verwendung von Kunststoff zusammen mit den Dehnfugen 5 die Elastizität der Kühleinrichtung 1 weiter gesteigert, was wiederum die oben bereits erwähnten Eigenschaften nochmals verbessert. Besonders günstig ist es dabei, wenn die Dehnfugen 5 überwiegend in Richtung der Längsachse der Speicherzellen 3 bzw. der zylindrischen Öffnungen 2 verlaufen, da sich die Wandungen 4 so ideal an die Aussenfläche der Speicherzellen 3 anschmiegen können.

Der Aufbau der Kühleinrichtung 1 sieht nun vor, dass diese von einem flüssigen Kühlmedium durchströmt wird, welches die Wandungen 4 kühlt, welche wiederum mit den Speicherzellen 3 der Batterie in dem kraftschlüssigen großflächigen Kontakt stehen. Durch die Verwendung eines flüssigen Kühlmittels lässt sich dabei eine weitaus bessere Kühlung erreichen, als es mit einem gasförmigen Kühlmedium der Fall wäre. Eine effiziente Kühlung wird auch dadurch möglich, dass die Wandungen sehr dünn ausgeführt werden können. In entsprechenden Versuchen haben sich Wandstärken für die den Speicherzellen 3 zugewandten Wandungen 4 von weniger als 1mm, insbesondere von 0,2 bis 0,7mm, als ausreichend erwiesen, um die elektrische Isolation der Speicherzellen 3 bei kleinstem möglichen Widerstand gegenüber der Wärmeleitung zu gewährleisten. Eine Ausreichende Mechanische Stabilität lässt sich dabei durch später noch erläuterte Maßnahmen und durch die übrigen nicht unmittelbar an der Kühlung beteiligten und entsprechend dickeren Wandungen mit Stärken von ca. 2-5mm sicherstellen.

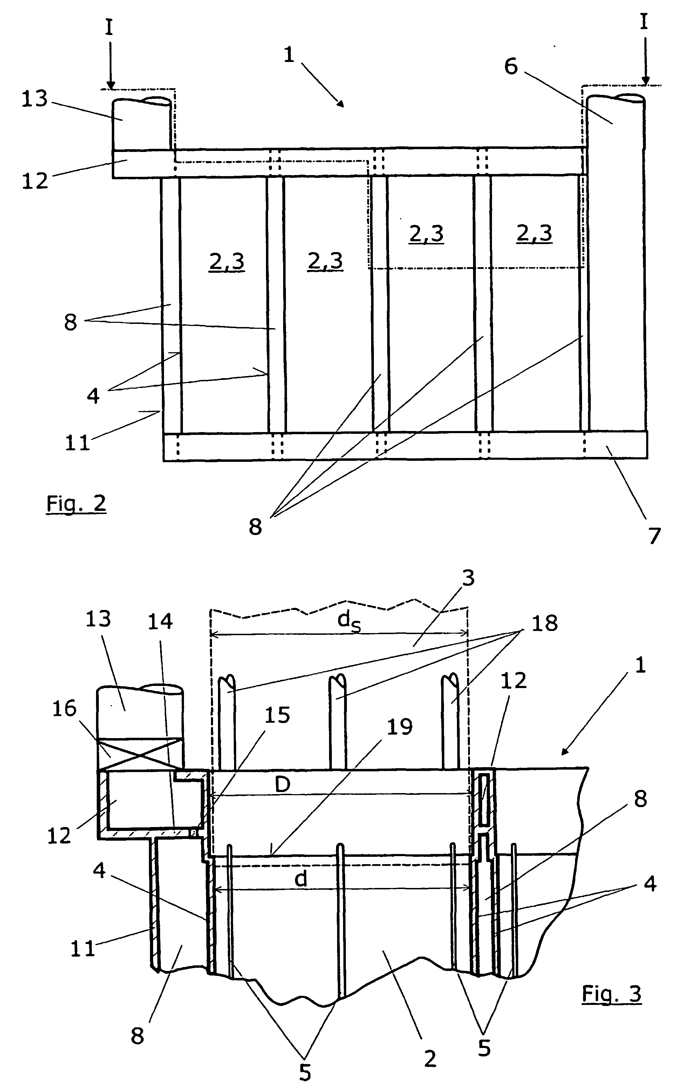

In Fig. 2 ist in einer stark schematisierten Darstellung erkennbar, in welcher Art und Weise das flüssige Kühlmedium die Kühleinrichtung 1 in idealer Weise durchströmen soll. Außerdem ist in Fig. 2 auch die Schnittlinie I-I der Schnittdarstellung aus Fig. 1 prinzipmäßig angedeutet, um diese zu verdeutlichen.

Das flüssige Kühlmedium strömt über eine Einströmleitung 6 in einen Kanal 7 ein, in welchem das flüssigen Kühlmedium auf Kühlkanäle 8, verteilt wird. Der als Verteilerkanal genutzte Kanal 7 verläuft auf der einen Seite der zylindrischen Öffnungen 2. Wenn die Öffnungen 2 die gesamte Kühleinrichtung 1 durchdringen, wie es ein dem hier dargestellten Ausführungsbeispiel der Fall ist, so sind die Öffnungen 2 entsprechend durch den Verteilerkanal 7 hindurchgeführt. Bei einem ebenfalls denkbaren Beispiel, bei dem die Öffnungen 2 als Sacklöcher ausgebildet sind, könnte der Verteilerkanal 7 auch als durchgehender flächiger Kanal ausgebildet sein.

Von dem Kanal 7 aus strömt das flüssige Kühlmedium in die Kühlkanäle 8, welche durch die wandungen 4 der Öffnungen 2 und durch Wandungen 9 von den Dehnfugen und von mit den Dehnfugen 5 verbundenen Durchtrittsöffnungen 10 gebildet werden, wie es in Fig. 1 zu erkennen ist. Bei dem nicht auf allen Seiten von weiteren Öffnungen 2 umgebenen Öffnungen 2 sind an der Bildung der Kühlkanäle 8 ausserdem die Aussenwandungen 11 der Kühleinrichtung beteiligt.

Wie es in Fig.1 weiter zu erkennen ist wird in diesem Aufbau der Kühleinrichtung 1 jede der Öffnungen 2 und damit auch jede der in den Öffnungen 2 angeordneten Speicherzellen 3 von sechs der Kühlkanäle 8 umgeben, welche jeweils parallel zu den Längsachsen der zylindrischen Öffnungen 2 bzw. der Speicherzelle 3 angeordnet sind. Nach dem Durchströmen der einzelnen Kühlkanäle 8 gelangt das flüssige Kühlmedium in einen Sammelkanal 12, wird dort gesammelt und einer Ausströmleitung 13 zugeführt, durch welche es die Kühleinrichtung 1 verlässt.

In Fig. 1 ist der Sammelkanal 12 dabei in dem der Ausströmleitung 13 zugewandten Teil der Schnittdarstellung dargestellt. Zwischen dem Sammelkanal 12 und den Kühlkanälen 8 ist eine Platte 14 erkennbar, welche die Kühlkanäle 8 von dem Sammelkanal 12 trennt. In der Platte 14 sind für jeden der Kühlkanäle 8 nur einige kleine Bohrungen 15 für den Durchtritt des Kühlmediums vorgesehen. Die Bohrungen 15 stellen einen Strömungswiderstand für das flüssige Kühlmedium dar, und sorgen so für eine gleichmäßige Verteilung des Volumenstroms des Kühlmediums und damit letztendlich der Kühlleistung auf alle Kühlkanäle 8. Die bevorzugte Richtung der Durchströmung der Kühleinrichtung 1 mit dem Kühlmedium ist dabei so, dass das Kühlmedium in den Kühlkanälen 8, bei bestimmungsgemäßem Einsatz der Batterie, entgegen der Schwerkraft strömt und dementsprechend nach dem Durchströmen der Kühlkanäle 8 durch die Bohrung 15 in den Sammelkanal 12 gelangt. Im Bereich der Einström- und Ausströmleitungen 6, 13 für das Kühlmedium können außerdem Einrichtungen zur Aufnahme von Sensoren, z.B. Temperaturfühler, oder dergleichen angeordnet sein, welche in Fig. 1 und auch in Fig. 3 prinzipmäßig als rechteckige Fläche 16 im Bereich der Ausströmleitung 13 angedeutet sind.

In den Bereichen zwischen den einzelnen Kühlkanälen 8 befinden sich die oben bereits erwähnten Durchtrittsöffnungen 10. Jede der Durchtrittsöffnungen 10 ist gemäß dem hier dargestellten Ausführungsbeispiel durch die Dehnfugen 5 mit den sie umgebenden Öffnungen 2 für die elektrochemischen Speicherzellen 3 verbunden. Die parallel zueinander verlaufenden Durchtrittsöffnungen 10 und Dehnfugen 5 können so eine ideale Elastizität der Kühlkanäle 8, mit den oben bereits mehrfach diskutierten Vorteilen ermöglichen. Ausserdem dienen die Durchtrittsöffnungen 10 bzw. ein Teil der Durchtrittsöffnungen 10 auch zur Aufnahme von elektrisch leitenden Verbindungen zwischen den Polen der elektrochemischen Speicherzellen 3 und/oder elektronischen Bauteilen (nicht dargestellt). Die Verbindungen können z.B. zusammen mit einer Überwachungselektronik den Ladezustand der einzelnen Speicherzellen 3 überwachen oder dergleichen. Bei geeigneter Ausgestaltung der durch die Durchgangsöffnungen 10 verlaufenden Verbindungen, z.B. als massive die Durchgangsöffnungen 10 ausfüllenden Stäbe aus Kupfer oder dergleichen, kann die Elektronik über die Wärmeableitung in die Verbindung durch die Kühleinrichtung 1 ebenfalls gekühlt werden.

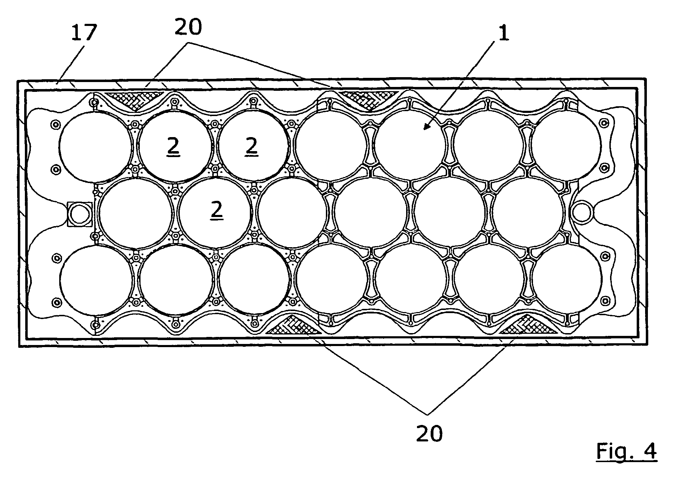

Durch die weiteren Durchtrittsöffnungen 10, wobei dies der größere Teil der Durchtrittsöffnungen 10 ist, sind Befestigungsmittel geführt, mittels welchen die Kühleinrichtung 1 einerseits stabilisiert und andererseits mit einem Gehäuse 17 (in Fig. 4 angedeutet) der Batterie, welches im allgemeinen als Batteriekasten bezeichnet wird, verbunden ist. Mittels der Befestigungsmittel, z.B. Schrauben, kann die Kühleinrichtung 1 in Richtung der Längsachsen der Öffnungen 2 unter eine Druckspannung gesetzt werden, so dass eine mechanische Stabilisierung der gesamten Kühleinrichtung 1 erzielt werden kann. Gleichzeitig kann die Befestigung im dem Gehäuse 17 realisiert werden, so dass von den Befestigungsmitteln ein doppelter positiver Effekt ausgeht.

Um nun die Befestigung möglichst sinnvoll zur Befestigung in dem Gehäuse 17 nutzen zu können sind zumindest ein Teil der Durchtrittsöffnungen 10 durch rohrförmige Fortsätze 18 über die Ausdehnung der Kühleinrichtung 1 in Richtung der Längsachsen hinaus verlängert. Diese Fortsätze 18 dienen dann praktisch als einstückig mit der Kühleinrichtung 1 ausgeführte Abstandhalter- bzw. -hülsen, so dass bei der Befestigung in dem Gehäuse 17 ein Abstand zwischen der Kühleinrichtung 1 und dem Gehäuse 17 verbleibt. In diesem Abstand können dann elektrische Verbindungen zwischen den Speicherzellen 3, Elektronikkomponenten oder dergleichen angeordnet werden. Sind z.B. die elektrischen Verbindungen zwischen den Speicherzellen 3 entsprechend ausgestaltet, so können diese sich als eine Art Fachwerk zwischen den Fortsätzen 18 ausdehnen und die Kühleinrichtung 1 zusätzlich mechanisch stabilisieren.

In Fig. 3 ist ein Teil einer der Öffnungen 2 zusammen mit einem Ausschnitt aus dem Sammelkanal 12 dargestellt. Die leicht schematisierte Schnittdarstellung geht dabei auf die Linie III-III in Fig. 1 zurück. Es ist zu erkennbar, dass die Dehnfugen 5 in den Öffnungen 2 nicht bzw. nur sehr knapp bis in den Bereich des Sammelkanals 12 reichen. Vergleichbares gilt auch für den Bereich des Verteilerkanals 7. Die Öffnungen 2 weisen im Bereich des zumindest einen Kanals 12, 7 zum Sammeln und/oder Verteilen des Kühlmediums einen größeren Durchmesser D auf, als im Bereich der Dehnfugen 5. Dabei ist der Durchmesser d im Bereich der Dehnfugen 5 bei nicht eingesetzter elektrochemischer Speicherzelle 3, welche hier schematisch angedeutet ist, minimal kleiner als der Durchmesser dₛ der elektrochemischen Speicherzelle 3, während der Durchmesser D größer als der Durchmesser dₛ der Speicherzelle 3 ist. Durch diesen Aufbau ergibt sich eine charakteristische Kante 19 am Übergang zwischen den Durchmessern D und d. Bei der Montage der Speicherzelle 3 wird diese nun in die Öffnung 2 im Bereich des Durchmessers D eingesetzt. Durch einschieben der Speicherzelle 3 in den Bereich der Öffnung 2 mit den Durchmesser d, werden die Wandungen 4 der Öffnung 2 in diesem Bereich, welcher auch die Dehnfugen 5 aufweist, entsprechend verformt. Die Wandungen 4 legen sich an die Speicherzelle 3 an. Neben der mechanischen Fixierung der Speicherzelle 3 werden so außerdem die bereits mehrfach erläuterten Vorteile durch die kraftschlüssige und großflächige Verbindung erzielt.

Der Aufwand bei der Montage, es ist keine explizite Befestigung der einzelnen Speicherzelle 3 notwendig, und bei der Herstellung, es sind nur vergleichsweise niedrige Anforderungen an die Fertigungstoleranzen zu stellen, kann so bei zumindest annähernd idealem Ergebnis hinsichtlich der Batteriekühlung minimiert werden.

In Fig. 4 ist die Batterie nochmals in einer schematischen Draufsicht mit offenem Gehäuse 17 dargestellt. Die Kühleinrichtung 1 ist analog zu Fig. 1 ausgebildet und daher nicht mehr mit allen Bezugszeichen versehen. Sie ist in dem Gehäuse 17 angeordnet, wobei durch die Anordnung der Öffnungen 2 in der hier dargestellten Art, welche in etwa der Art der dichtesten Kugelpackung entspricht, wie sie aus dem Bereich der Kristallographie bekannt ist, eine sehr kompakte Batterie erzielt wird, welche dennoch ideal zu kühlen ist. Dabei ist die Kühleinrichtung 1 selbst sowohl gegenüber den elektrochemischen Speicherzellen 3 als auch gegenüber dem sie umgebenden Gehäuse 17 dicht ausgebildet. Die Kühleinrichtung 1 bildet also eine eigenes dichtes System, welches die Möglichkeit der Integration von Elektronik und dergleichen in das Gehäuse 17 ermöglicht.

Je nach eingesetztem Kühlmedium, z.B. Wasser, ein Gemisch aus Wasser und Frostschutzmittel, ein Wärmeträgeröl oder dergleichen, kann es in Verbindung mit den in bevorzugter Weise für die Herstellung der Kühleinrichtung 1 eingesetzten Kunststoffen, wie PP oder PA, zu Problemen mit der Dichtheit über einen langen Zeitraum kommen. Insbesondere bei der üblicherweise sicherlich in den meisten Fällen bevorzugten Verwendung von wasserhaltigen Kühlmedien, kann es zu einer Diffusion von Wasser in und damit letztendlich auch durch den Kunststoff kommen. Die Dichtheit der Kühleinrichtung 1 ist damit nicht mehr zu 100% sichergestellt.

Abhilfe bieten hier im wesentlichen zwei verschiedene Ansätze. Einerseits kann die Kühleinrichtung 1 bzw. ihre Wandungen 4, 9, 11 mit einer für das eingesetzte Kühlmedium diffusionsdichten Schicht versehen werden. Die Kühleinrichtung 1 lässt sich dann vollkommen dicht ausbilden. Andererseits sind die Mengen an durch Diffusion austretendem Kühlmedium, z.B. Wasser, sehr gering. Eine sinnvolle Alternative zu der diffusionsdichten Schicht, kann daher auch der Einsatz von Trocknungsmittel, insbesondere in Form einer oder mehreren austauschbaren Patronen 20 sein, welche im Bereich zwischen dem Gehäuse 17 und der Kühleinrichtung 1 angeordnet sein können.

Eine so aufgebaute Batterie erfüllt die eingangs bereits erläuterten Anforderungen bei kleiner und platzsparender Bauart in zumindest annähernd idealer Weise und ist damit besonders gut geeignet, um als elektrische Energiespeichereinrichtung in einem Fahrzeug mit wenigstens einer zu Traktionszwecken genutzten Elektromaschine, eingesetzt zu werden. Besonders günstig ist es bei einem derartigen Einsatzzweck auch, dass die Einström- und Ausströmleitungen 6, 13 zusammen von einer Seite aus zugänglich sind, so dass das Gehäuse 17 als Wanne mit Deckel ausgebildet werden kann. Die an sich dicht und einstückige ausgestaltete Wanne mit nur einem Deckel - und damit nur wenigen Dichtflächen - wird Sicherheitsüberlegungen besser gerecht als eine mehrteilige Ausführung des Gehäuses 17 und erleichtert außerdem die Montage bzw. Wartung. Als Kühlmedium kann bei der Verwendung in einem Fahrzeug sowohl ein in einem Kühlkreislauf des Fahrzeuges ohnehin zirkulierendes Medium verwendet werden, so dass keine eigene Fördereinrichtung notwendig wird, es ist jedoch auch denkbar, einen eigenen Kühlkreislauf für die Batterie aufzubauen.

## Patentansprüche

1. Batterie mit wenigstens einer elektrochemischen Speicherzelle und einer Kühleinrichtung, wobei die wenigsten eine elektrochemische Speicherzelle zwischen Teilen der Kühleinrichtung angeordnet ist, und wobei die Kühleinrichtung von einem flüssigen Kühlmedium durchströmt ist,
**dadurch gekennzeichnet,**
**dass** die wenigstens eine elektrochemische Speicherzelle (3) in wenigstens einer Öffnung (2) der Kühleinrichtung (1) aufgenommen ist, und mit jeweils wenigstens einer in einer Richtung senkrecht zu einer Längsachse der elektrochemischen Speicherzelle (2) gekrümmten Aussenfläche zumindest teilweise in kraftschlüssigem Kontakt mit der Kühleinrichtung (1) steht, wobei die Kühleinrichtung (1) in den Bereichen des kraftschlüssigen Kontakts wenigstens eine Dehnfuge (5) aufweist.

2. Batterie nach Anspruch 1,
**dadurch gekennzeichnet,**
**dass** die Kühleinrichtung (1) aus einem Kunststoff ausgebildet ist, wobei die wenigstens eine Öffnung (2) und die wenigstens eine Dehnfuge (5) überwiegend in Richtung der Längsachse der elektrochemische Speicherzelle (3) ausgerichtet sind.

3. Batterie nach Anspruch 1 oder 2,
**dadurch gekennzeichnet,**
**dass** die Kühleinrichtung (1) sowohl gegenüber der wenigstens einen elektrochemischen Speicherzelle (3), als auch gegenüber einem sie umgebenden Gehäuse (17) dicht ausgebildet ist.

4. Batterie nach Anspruch 1, 2 oder 3,
**dadurch gekennzeichnet,**
**dass** die Kühleinrichtung (1) einstückig ausgebildet ist.

5. Batterie nach einem der Ansprüche 1 bis 4,
**gekennzeichnet durch**
mehrere der elektrochemischen Speicherzellen (3), welche jeweils zylindrisch ausgebildet und in den Öffnungen (2) der Kühleinrichtung (1) angeordnet sind, wobei die Öffnungen (2) in der Art der dichtesten Packung so angeordnet sind, dass die Längsachsen der Öffnungen (2) und der elektrochemischen Speicherzellen (3) jeweils wenigsten annähernd parallel zueinander verlaufen.

6. Batterie nach Anspruch 5,
**dadurch gekennzeichnet,**
**dass** die Bereiche zwischen den einzelnen Öffnungen (2) für die elektrochemischen Speicherzellen (3) jeweils durch Wandungen (9) von dem Kühlmedium getrennte Durchtrittsöffnungen (10) aufweisen, deren Mittelachsen wenigstens annähernd parallel zu den Längsachsen der elektrochemischen Speicherzellen (3) angeordnet sind.

7. Batterie nach Anspruch 6,
**dadurch gekennzeichnet,**
**dass** jede der Durchtrittsöffnungen (10) durch die Dehnfugen (5) mit den sie umgebenden Öffnungen (2) für die elektrochemischen Speicherzellen (3) verbunden sind.

8. Batterie nach Anspruch 6 oder 7,
**dadurch gekennzeichnet,**
**dass** Wandungen (4) der Öffnungen (2) für die elektrochemischen Speicherzellen (3) zusammen mit den Wandungen (9) der Dehnfugen (5) und den Wandungen (9) der Durchtrittsöffnungen (10) jeweils parallel zu den Längsachsen verlaufende Kühlkanäle (8) ausbilden, wobei die Kühlkanäle (8) mit wenigstens einem Verteilerkanal (7) zum Verteilen des Kühlmediums in die Kühlkanäle (8) und mit wenigstens einem Sammelkanal (12) zum Sammeln des Kühlmediums aus den Kühlkanälen (8) verbunden sind.

9. Batterie nach Anspruch 8,
**dadurch gekennzeichnet,**
**dass** die Öffnungen (2) für die elektrochemischen Speicherzellen (3) und die Durchtrittsöffnungen (10) zumindest durch einen der Kanäle (7,12) zum Sammeln und/oder Verteilen des Kühlmediums durchgeführt sind.

10. Batterie nach Anspruch 9,
**dadurch gekennzeichnet,**
**dass** die Dehnfugen (5) in den Öffnungen (2) nicht oder nur knapp bis in den Bereich des zumindest einen Kanals (7,12) zum Sammeln und/oder Verteilen des Kühlmediums reichen, wobei die Öffnungen (2) für die elektrochemischen Speicherzellen (3) im Bereich des zumindest einen Kanals (7,12) zum Sammeln und/oder Verteilen des Kühlmediums einen größeren Durchmesser (D) aufweisen, als im Bereich der Dehnfugen (5), und wobei der Durchmesser (d) im Bereich der Dehnfugen (5) bei nicht eingesetzten elektrochemischen Speicherzellen (3) kleiner als der Durchmesser (dₛ) der elektrochemischen Speicherzellen (3) ist.

11. Batterie nach einem der Ansprüche 6 bis 10,
**dadurch gekennzeichnet,**
**dass** durch zumindest einen Teil der Durchtrittsöffnungen (10) elektrisch leitende Verbindungen zwischen den Polen der elektrochemische Speicherzellen (3) und/oder elektronischen Bauteilen geführt sind.

12. Batterie nach einem der Ansprüche 6 bis 11,
**dadurch gekennzeichnet,**
**dass** durch zumindest einen Teil der Durchtrittsöffnungen (10) Befestigungsmittel geführt sind, mittels welchen die Kühleinrichtung (1) stabilisiert und/oder mit dem Gehäuse (17) verbunden ist

13. Batterie nach einem der Ansprüche 6 bis 12,
**dadurch gekennzeichnet,**
**dass** zumindest ein Teil der Durchtrittsöffnungen (10) durch rohrförmige Fortsätze (18) über die Ausdehnung der Kühleinrichtung (1) in Richtung der Längsachsen hinaus verlängert ist.

14. Batterie nach einem der Ansprüche 8 bis 13,
**dadurch gekennzeichnet,**
**dass** zumindest in einem der Bereiche des Übertritts des Kühlmediums in oder aus den Kühlkanälen (8) aus oder in den Bereich des zumindest einen Kanals (7,12) zum Sammeln und/oder Verteilen des Kühlmediums Strömungwiderstände (Bohrungen 15) angeordnet sind.

15. Batterie nach einem der Ansprüche 8 bis 14,
**dadurch gekennzeichnet,**
**dass** die Kühleinrichtung (1) jeweils wenigstens eine Einström- und Ausströmleitung (6,13) für das Kühlmedium aufweist, wobei im Bereich dieser Leitungen (6,13) Einrichtungen (16) zur Aufnahme von Sensoren oder dergleichen angeordnet sind.

16. Batterie nach einem der Ansprüche 1 bis 15,
**dadurch gekennzeichnet,**
**dass** die Wandungen (4,9,11) der Kühleinrichtung (1) zumindest teilweise mit einer für das Kühlmedium diffusionsdichten Schicht versehen sind.

17. Batterie nach einem der Ansprüche 1 bis 15,
**dadurch gekennzeichnet,**
**dass** im Bereich zwischen der Kühleinrichtung (1) und dem Gehäuse (17) Trocknungsmittel, insbesondere in Form wenigsten einer austauschbaren Patrone (20), angeordnet ist.

18. Verwendung einer Batterie nach eine der oben genannten Ansprüche als elektrische Energiespeichereinrichtung in einem Fahrzeug mit wenigstens einer zu Traktionszwecken genutzten Elektromaschine.

## Claims

1. Battery having at least one electrochemical storage cell and a cooling device, with the at least one electrochemical storage cell being arranged between parts of the cooling device, and with a liquid cooling medium flowing through the cooling device,
**characterized**
**in that** the at least one electrochemical storage cell (3) is held in at least one opening (2) in the cooling device (1) and at least one outer surface, which is curved in a direction at right angles to a longitudinal axis of the electrochemical storage cell (2), at least partially makes a force-fitting contact with the cooling device (1) in each case, with the cooling device (1) having at least one expansion joint (5) in the areas of the force-fitting contact.

2. Battery according to Claim 1,
**characterized**
**in that** the cooling device (1) is formed from a plastic with the at least one opening (2) and the at least one expansion joint (5) being aligned predominantly in the direction of the longitudinal axis of the electrochemical storage cell (3).

3. Battery according to Claim 1 or 2,
**characterized**
**in that** the cooling device (1) is designed to be sealed both with respect to the at least one electrochemical storage cell (3) and with respect to a housing (17) which surrounds it.

4. Battery according to Claim 1, 2 or 3,
**characterized**
**in that** the cooling device (1) is integral.

5. Battery according to one of Claims 1 to 4,
**characterized by**
two of the electrochemical storage cells (3) which are each cylindrical and are arranged in the openings (2) in the cooling device (1), with the openings (2) being arranged in the form of the densest packing, such that the longitudinal axes of the openings (2) and of the electrochemical storage cells (3) each run at least approximately parallel to one another.

6. Battery according to Claim 5,
**characterized**
**in that** the areas between the individual openings (2) for the electrochemical storage cells (3) each have aperture openings (10) which are separated from the cooling medium by the walls (9) and whose centred axes are arranged at least approximately parallel to the longitudinal axes of the electrochemical storage cells (3).

7. Battery according to Claim 6,
**characterized**
**in that** each of the aperture openings (10) is connected by means of the expansion joints (5) to the openings (2) which surround the electrochemical storage cells (3).

8. Battery according to Claim 6 or 7,
**characterized**
**in that** walls (4) of the openings (2) for the electrochemical storage cells (3), together with the walls (9) of the expansion joints (5) and the walls (9) of the aperture openings (10), each form cooling channels (8) which run parallel to the longitudinal axes, with the cooling channels (8) being connected to the at least one distribution channel (7) for distribution of the cooling medium into the channels (8), and being connected to at least one collecting channel (12) for collection of the cooling medium from the cooling channels (8).

9. Battery according to Claim 8,
**characterized**
**in that** the openings (2) of the electrochemical storage cells (3) and the aperture openings (10) are passed through at least one of the channels (7, 12) for collection and/or distribution of the cooling medium.

10. Battery according to Claim 9,
**characterized**
**in that** the expansion joints (5) in the openings (2) do not extend, or extend only slightly, into the area of the at least one channel (7, 12) for collection and/or distribution of the cooling medium, with the openings (2) for the electrochemical storage cells (3) having a larger diameter (D) in the area of the at least one channel (7, 12) for collection and/or distribution of the cooling medium than in the area of the expansion joints (5), and with the diameter (d) in the area of the expansion joints (5) being less than the diameter (dₛ) of the electrochemical storage cells (3) when the electrochemical storage cells (3) are not inserted.

11. Battery according to one of Claims 6 to 10,
**characterized**
**in that** electrically conductive connections between the poles of the electrochemical storage cells (3) and/or electronic components are passed through at least some of the aperture openings (10).

12. Battery according to one of Claims 6 to 11,
**characterized**
**in that** attachment means, by means of which the cooling device (1) is made robust and/or is connected to the housing (17), are passed through at least some of the aperture openings (10).

13. Battery according to one of Claims 6 to 12,
**characterized**
**in that** at least some of the aperture openings (10) are lengthened by means of tubular projections (18) beyond the extent of the cooling device (1) in the direction of the longitudinal axes.

14. Battery according to one of Claims 8 to 13,
**characterized**
**in that** flow resistances (holes 15) are arranged at least in one of the areas for the passage of the cooling medium into or out of the cooling channels (8) or in the area of the at least one channel (7, 12) for collection and/or distribution of the cooling medium.

15. Battery according to one of Claims 8 to 14,
**characterized**
**in that** the cooling device (1) in each case has at least one inlet and outlet line (6, 13) for the cooling medium, with devices (16) for holding sensors or the like being arranged in the area of these lines (6, 13).

16. Battery according to one of Claims 1 to 15,
**characterized**
**in that** the walls (4, 9, 11) of the cooling device (1) are provided at least in places with a layer through which the cooling medium cannot diffuse.

17. Battery according to one of Claims 1 to 15,
**characterized**
**in that** a desiccant, in particular in the form of at least one replaceable cartridge (20), is arranged in the area between the cooling device (1) and the housing (17).

18. Use of a battery according to one of the claims mentioned above as an electrical energy storage device in a vehicle having at least one electrical machine which is used for traction purposes.

## Revendications

1. Batterie avec au moins une cellule de stockage électrochimique et un dispositif de refroidissement où au moins ladite cellule de stockage électrochimique est disposée entre des éléments du dispositif de refroidissement et où le dispositif de refroidissement est parcouru par un fluide de refroidissement liquide, **caractérisée en ce qu'**au moins ladite cellule de stockage électrochimique (3) est logée dans au moins une ouverture (2) du dispositif de refroidissement (1) et **en ce que**, respectivement au moins une surface extérieure courbée dans une direction perpendiculaire par rapport à un axe longitudinal de la cellule de stockage électrochimique (2) se trouve en liaison par force avec le dispositif de refroidissement (1), le dispositif de refroidissement (1) présentant au moins un joint de dilatation (5) au niveau des zones de liaison par force.

2. Batterie selon la revendication 1, **caractérisée en ce que** le dispositif de refroidissement (1) est constitué de plastique, au moins une ouverture (2) et au moins un joint de dilatation (5) étant alignés principalement dans le sens de l'axe longitudinal de la cellule de stockage électrochimique (3).

3. Batterie selon la revendication 1 ou 2, **caractérisée en ce que** le dispositif de refroidissement (1) est réalisé de manière étanche non seulement par rapport à au moins ladite cellule de stockage électrochimique (3), mais aussi par rapport à un boîtier (17) qui l'enveloppe.

4. Batterie selon la revendication 1, 2 ou 3, **caractérisée en ce que** le dispositif de refroidissement (1) est réalisé en une seule pièce.

5. Batterie selon l'une quelconque des revendications 1 à 4, **caractérisé par** plusieurs cellules de stockage électrochimiques (3), lesquelles sont toutes réalisées en forme de cylindre et sont disposées dans les ouvertures (2) du dispositif de refroidissement (1), les ouvertures (2) étant aménagées de manière la plus étanche possible de sorte que les axes longitudinaux des ouvertures (2) et des cellules de stockage électrochimiques (3) s'étendent respectivement de manière au moins approximativement parallèle les uns par rapport aux autres.

6. Batterie selon la revendication 5, **caractérisée en ce que** les zones entre les différentes ouvertures (2) pour les cellules de stockage électrochimiques (3) présentent des ouvertures de passage (10) chacune séparées du fluide de refroidissement par des parois (9), ouvertures de passage dont les axes centraux sont disposés de manière au moins approximativement parallèle aux axes longitudinaux des cellules de stockage électrochimiques (3).

7. Batterie selon la revendication 6, **caractérisée en ce que** chacune des ouvertures de passage (10) est reliée par des joints de dilatation (5) avec les ouvertures (2) qui les entourent et destinées aux cellules de stockage électrochimiques (3).

8. Batterie selon la revendication 6 ou 7, **caractérisée en ce que** des parois (4) des ouvertures (2) pour les cellules de stockage électrochimiques (3) forment, conjointement avec les parois (9) des joints de dilatation (5) et les parois (9) des ouvertures de passage (10), des canaux de refroidissement (8) s'étendant respectivement parallèlement aux axes longitudinaux, les canaux de refroidissement (8) étant reliés avec au moins un canal de distribution (7) servant à distribuer le fluide de refroidissement dans les canaux de refroidissement (8) et avec au moins un canal collecteur (12) servant à collecter le fluide de refroidissement venant des canaux de refroidissement (8).

9. Batterie selon la revendication 8, **caractérisée en ce que** les ouvertures (2) pour les cellules de stockage électrochimiques (3) et les ouvertures de passage (10) sont traversées par au moins l'un des canaux (7, 12) pour collecter et/ou distribuer le fluide de refroidissement.

10. Batterie selon la revendication 9, **caractérisée en ce que** les joints de dilatation (5) dans les ouvertures (2) n'atteignent pas ou faiblement la zone d'au moins un canal (7, 12) pour collecter et/ou distribuer le fluide de refroidissement, les ouvertures (2) pour les cellules de stockage électrochimiques (3) présentant un diamètre (D) plus grand pour collecter ou distribuer le fluide de refroidissement au niveau d'au moins un canal (7, 12) ainsi qu'au niveau des joints de dilatation (5) et le diamètre (d) au niveau des joints de dilatation (5) avec les cellules de stockage électrochimique (3) non placées étant plus petit que le diamètre (dₛ) des cellules de stockage électrochimiques (3).

11. Batterie selon l'une quelconque des revendications 6 à 10, **caractérisée en ce qu'**au moins une partie des ouvertures de passage (10) fait passer des liaisons conductrices d'électricité entre les pôles des cellules de stockage électrochimiques (3) et/ou les composants électroniques.

12. Batterie selon l'une quelconque des revendications 6 à 11, **caractérisée en ce qu'**au moins une partie des ouvertures de passage (10) fait passer des éléments de fixation au moyen desquels le dispositif de refroidissement (1) est stabilisé et/ou relié au boîtier (17).

13. Batterie selon l'une quelconque des revendications 6 à 12, **caractérisée en ce qu'**au moins une partie des ouvertures de passage (10) est prolongée au-delà de la dilatation du dispositif de refroidissement (1) dans le sens des axes longitudinaux par des prolongements tubulaires (18).

14. Batterie selon l'une quelconque des revendications 8 à 13, **caractérisée en ce qu'**au moins dans une des zones du passage du fluide de refroidissement dans ou hors des canaux de refroidissement (8), on a aménagé des résistances à l'écoulement (perçages 15) dans ou hors de la zone d'au moins un canal (7,12) servant à collecter et/ou à distribuer le fluide de refroidissement.

15. Batterie selon l'une quelconque des revendications 8 à 14, **caractérisée en ce que** le dispositif de refroidissement (1) présente respectivement au moins une conduite d'entrée et de sortie (6, 13) du fluide de refroidissement, des dispositifs (16) servant à accueillir des capteurs ou autres étant disposés au niveau de ces conduites (6, 13).

16. Batterie selon l'une quelconque des revendications 1 à 15, **caractérisée en ce que** les parois (4, 9, 11) du dispositif de refroidissement (1) sont pourvues au moins partiellement d'une couche étanche à la diffusion du fluide de refroidissement.

17. Batterie selon l'une quelconque des revendications 1 à 15, **caractérisée en ce que**, dans la zone entre le dispositif de refroidissement (1) et le boîtier (17), on a disposé un dessiccateur, en particulier sous la forme d'au moins une cartouche (20) remplaçable.

18. Utilisation d'une batterie selon l'une des revendications citées plus haut en tant que dispositif de stockage d'énergie électrique dans un véhicule avec au moins une machine électrique servant à des fins de traction.
